# EUROPEAN PATENT APPLICATION

(11) **EP 0 955 637 A2**
(43) Date of publication of application: **10.11.1999**
(21) Application number: 99303548.4
(22) Date of filing: 06.05.1999
(51) Int. Cl.: G11B 23/087, G11B 25/06

(54) **System comprised of cartridge having recording and/or reproducing mechanism unit and electronic equipment**

(30) Priority: 07.05.1998 JP 12506498; 18.05.1998 JP 13546498
(71) Applicant: SONY CORPORATION, Tokyo (JP)
(72) Inventor: Yamamoto, Kazutoshi, Sony Corp., Tokyo (JP); Iwata, Makoto, c/o Sony Kohda Corp., Nukata-gun, Aichi-ken (JP); Kobayashi, Hiroshi, c/o Sony Corp., Tokyo (JP)
(74) Representative: Ayers, Martyn Lewis Stanley

(57) **Abstract**

A system is comprised of a cartridge having a recording and/or reproducing mechanism unit and an electronic equipment. The recording and/or reproducing mechanism unit is formed in such a manner that a rotary head drum, a supply side tape reel and a take-up side tape reel are made integral one another and then incorporated in a cartridge housing, so that the cartridge housing can be formed thin. In the cartridge housing, the supply side tape reel is disposed higher the take-up side tape reel or with a step difference therebetween in the height direction, a magnetic tape drawn out from the supply side tape reel is wound amount the rotary head drum via a tape guide roller and an inclined guide on the drum entrance side, then wound around the take-up side tape reel via an inclined guide and a tape guide roller on the drum exit side, and the rotary head drum is disposed at an inclination angle nearly horizontal.

## Description

The present invention relates to a system comprising an electronic equipment suitable for use in a video camera device for home use or the like and a cartridge having a recording and/or reproducing mechanism unit comprised of a pair of tape reels and a rotary head drum around which a magnetic tape drawn out from the tape reel is wound in a helical fashion to carry out recording and/or reproducing operation, which are integrated in a cartridge housing. In detail, the present invention relates to a technique in which a supply reel and a take-up reel are disposed to present a step difference therebetween in a height direction thereof so that the inclination of the rotary head drum can be made substantially horizontal. Hence, the cartridge housing can be made thin, and also the mechanism unit can be simplified drastically.

The applicant of the present invention has already proposed a cartridge having a so-called recording and/or reproducing mechanism unit in which a tape reel and a rotary head drum are integrally incorporated in a cartridge housing. In such a kind of the cartridge, a magnetic tape drawn out from a supply side reel is wound around the rotary head drum and then wound around a take-up side reel, and the above state is maintained as it is. Therefore, unlike the prior art, it becomes unnecessary to provide a magnetic tape charge/discharge mechanism and a magnetic tape loading mechanism. Thus, there is proposed a recording and/or reproducing apparatus in which whole the mechanism can be simplified remarkably and made compact.

The above-mentioned cartridge is inserted into an electronic equipment, for example, a video camera device main body, and the recording and/or reproducing apparatus of the cartridge is driven by vide/audio signals and servo signals from the device main body as a camera unit takes up an image to record the video signal, an audio signal or the like on the magnetic tape, or to reproduce the recorded video signal and audio signal which can be monitored on a liquid crystal display of the video camera device main body.

According to the cartridge described above, since the signal recorded on the magnetic tape is reproduced by the same rotary head drum upon recording, at the time of recording and reproducing, relative to the rotary head drum, the magnetic tape can trace (scan) the same track position. Therefore, it is needless to make the specification of the dimension accuracy of the rotary head drum and the accuracy of the drum lead for the rotary head drum severe and it is possible to obtain a clear picture and a sharp sound.

In the tape reel in the conventional tape drive mechanism, a fixed-type brake member is made in contact with the body of the reel frictionally to thereby place the tape reel in a light braking state, apply a back tension to the travelling or running magnetic tape and to present the magnetic tape from being loosed.

By the way, in the recording and/or reproducing mechanism of the cartridge mentioned above, since the magnetic tape is wound around the rotary head drum helically, the rotary head drum is inclined at a predetermined angle. Further, because the supply reel side and the take-up side reel are disposed at the same height level generally, there is a tendency that the inclination angle of the rotary head drum should be increased as the drum head angle becomes large. As a result, when the rotary head drum is inclined large, the height space for the rotary head drum is required much, resulting in that the thickness of the cartridge increases, which becomes an obstacle to make the cartridge thin.

On the other hand, the magnetic tape drawn out from the supply side reel is restricted by a tape guide and an inclined guide on the drum entrance side in the travelling or running direction of the magnetic tape and the tape height, and then wound around the rotary head drum. The magnetic tape coming out from the rotary head drum is restricted by a tape guide and an inclined guide on the drum exit side in the magnetic tape running direction and the tape height, and then taken up by the take-up side reel. For this reason, high part accuracy is required for the tape guides and the inclined guides on the drum entrance side and the drum exit side, and also a high position accuracy is required therefor.

Further, in the fixed brake type, the brake member is provided for each of the supply side reel and the take-up side reel so that the space for the brake member is necessary and the cartridge size is increased by that extent, which becomes an obstacle for minimizing the cartridge. Also, since a part to be fixed together with the brake member is necessary, the number of parts becomes large.

Such a system that the tape reel is rotatably supported by a reel shaft is employed so that it is separately required to use a part which prevents the tape reel from being floated when, for example, the upper and lower sides of the cartridge are reversed.

In view of the above problems, it is an object of the present invention to provide a system comprised of a cartridge having a recording and/or reproducing mechanism unit, which can make a cartridge housing thin, can simplify a tape running mechanism, and carries out the brake function of a tape reel and the tape reel float preventing function by one member, and an electronic equipment.

According to an aspect of the present invention, there is provided a cartridge having a recording and/or reproducing mechanism unit which is comprised of a pair of reel bases, tape reels mounted on the pair of reel bases, respectively, and a drum around which a magnetic tape drawn out from the tape reel is helically wound for carrying out recording and/or reproducing thereon and/or therefrom. The above-mentioned recording and/or reproducing mechanism unit is incorporated in a housing integrally. In the cartridge, the pair of tape reels are arranged with a step difference in the height direction by a step difference means. A magnetic tape drawn out from the tape reel is wound around the drum helically due to the height difference of the tape reels.

According to the cartridge of the present invention, since the pair of tape reels are arranged with the step difference in the height direction, when the magnetic tape is wound around the drum, the magnetic tape is wound around the drum helically. Therefore, the drum can be inclined at an angle near the horizontal and hence the height space of the drum can be set low to thereby make it possible to reduce the thickness of the cartridge.

According to the cartridge having the recording and/or reproducing mechanism unit of the present invention, the pair of tape reels are held at the upper rotation centers thereof by reel urging members and frictional forces are generated in the tape reels in the thrust direction to cause a light brake action on the magnetic tape.

Thus, a light back tension is applied to the magnetic tape during its running by the brake force applied to the tape reel, so that the magnetic tape can be prevented from being loosed. Further, since the tape reel is pressed by the reel urging member from above, even when the cartridge is reversed up and down, the tape reel can be prevented from being floated.

A system according to the present invention is comprised of a cartridge having a recording and/or reproducing mechanism unit, which is formed of a pair of reel bases, a pair of tape reels mounted on the pair of reel bases and a drum around which a magnetic tape drawn out from the tape reel is wound helically, is integrally incorporated within a housing, and a step difference means for arranging the pair of tape reels with a step difference therebetween in a height direction, the magnetic tape drawn out from the tape reels being helically wound around the drum by the step difference in the height direction, and an electronic equipment, into which the cartridge is detachably inserted, having a connector to which an input/output terminal portion of the cartridge is electrically connected, and a drive circuit for driving the recording and/or reproducing mechanism unit to thereby carry out recording and/or reproducing of the cartridge.

According to the system of the present invention, since the pair of tape reels are arranged with the step difference in the height direction, when the magnetic tape is wound around the drum, the magnetic tape is wound around the drum helically. Therefore, the drum can be inclined at an angle nearly horizontal and hence the height of the drum can be set low to thereby making it possible to reduce the thickness of the cartridge.

Accordingly, the cartridge can be made thin so that the electronic equipment may be made compact.

According to the system having the cartridge and the electronic equipment of the present invention, the cartridge detachably inserted into the electronic equipment has the pair of tape reels which are held at the upper rotation centers thereof by reel urging plate members and frictional forces are generated in the tape reels in the thrust direction to cause a light brake action on the tape reel.

Thus, since a light back tension is applied to the magnetic tape during its running by the brake force applied to the tape reel, the magnetic tape can be prevented from being loosed. Further, since the tape reel is pressed by the reel urging member from above, even when the cartridge is reversed up and down, the tape reel can be prevented from being floated.

The present invention will be more clearly understood from the following description, given by way of example only, with reference to the accompanying drawings in which:
FIG. 1 is a plan view showing a recording and/or reproducing mechanism of a cartridge according to the present invention;
FIG. 2 is a front view showing the arranging state of a pair of tape reels and a rotary head drum;
FIG. 3 is a side view showing the arranging state of a guide roller, a tape tension adjusting mechanism and a supply side tape reel;
FIG. 4 is a plan view of a drive mechanism for the tape reel;
FIG. 5 is a perspective view showing an appearance of the cartridge and a video camera device;
FIG. 6 is a cross-sectional view of a supply side tape reel; and
FIG. 7 is a graph showing the relationship between the spring force of a reel urging plate spring and a back tension applied to a tape.

### DESCRIPTION OF THE PREFERRED EMBODIMENT

An example in which an embodiment of a system, comprised of a cartridge having a recording and/or reproducing mechanism unit according to the present invention and an electronic equipment, is applied to a video camera device will be described.

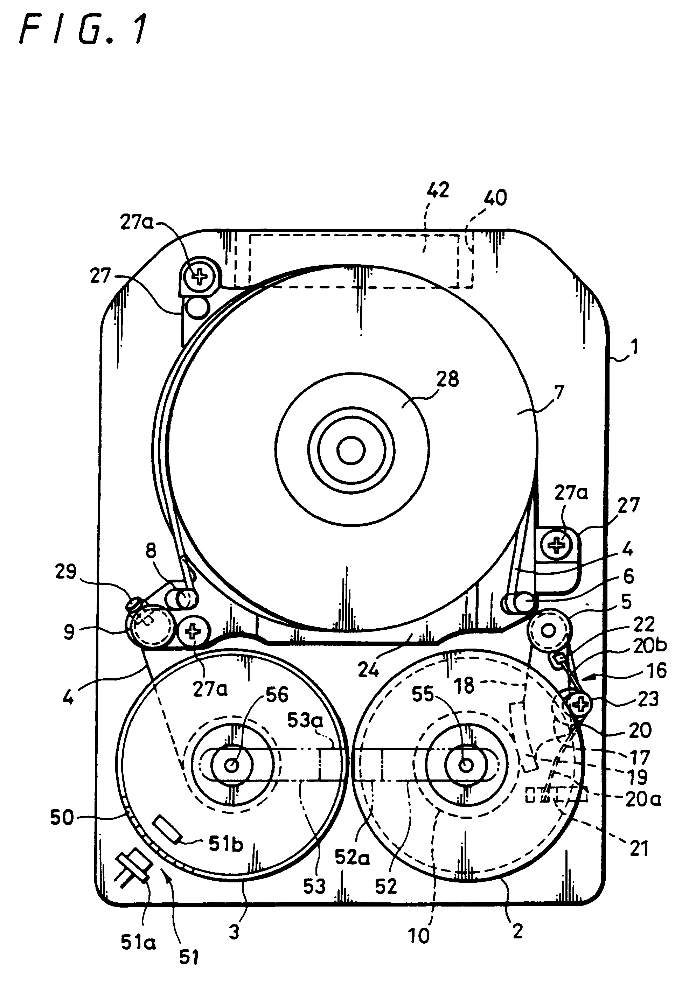

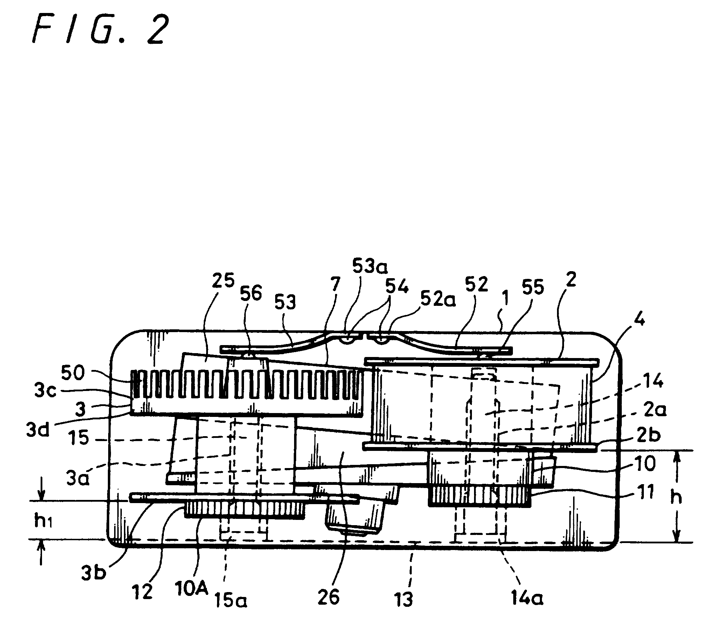

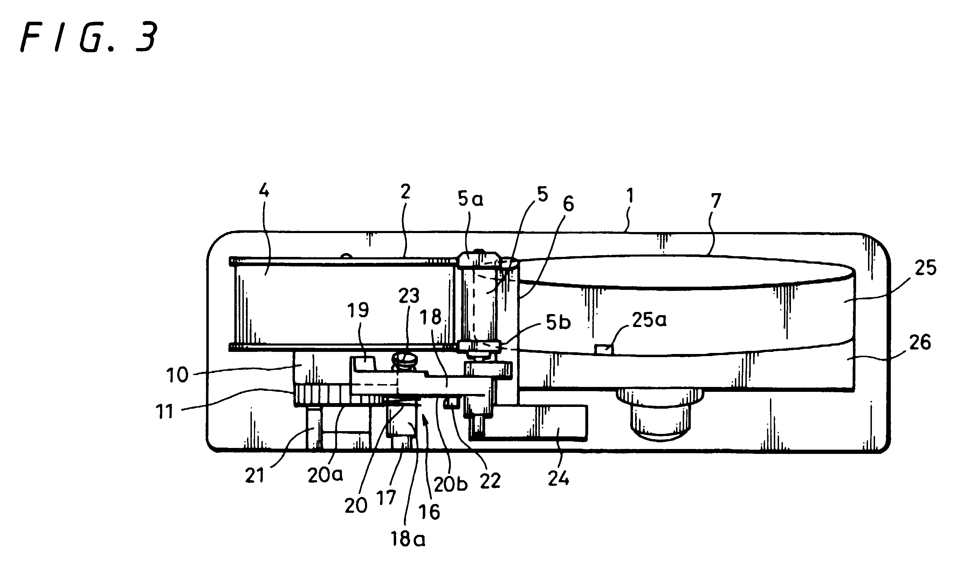

FIG. 1 is a plan view showing a tape running system of a recording and/or reproducing mechanism unit integrally incorporated in a cartridge, FIG. 2 is a front view showing the arranging state of a tape reel and a rotary head drum, and FIG. 3 is a side view showing a supply side tape reel seen from its side.

First of all, the tape running system will be described with reference to FIG. 1.

Reference numeral 1 designates a cartridge housing, and reference numerals 2 and 3 denote a supply side tape reel and a take-up side tape reel, respectively. A tape or magnetic tape 4 drawn out from the supply side tape reel 2 is wound around a drum entrance side inclined guide 6 via a guide roller 5 on the supply side, is changed in a tape running direction and a tape heigh, and then wound around a rotary head drum 7 helically. The tape 4 drawn out from the rotary head drum 7 is wound around a guide roller 9 on the take-up side via a drum exit side inclined guide 8, changed in the tape running direction and tape height, and then wound around the take-up side tape reel 3.

Next, each mechanism unit of the recording and/or reproducing mechanism unit will be described.

The supply side tape reel 2 integrally includes a reel base 10 on its lower surface and a gear 11 on the lower surface of the reel base 10. The take-up side tape reel 3 integrally includes a reel base 10A to the lower surface of which a gear 12 is attached. The reel shaft apertures 2a, 3a of the tape reels 2,3 are rotatably engaged with reel support shafts 14, 15 planted on a chassis 13 of the cartridge housing 1. In this case, the supply side tape reel 2 is disposed higher than the take-up side tape reel 3 in the height direction. That is, a height h from the upper surface of the chassis 13 of cartridge housing 1 to the lower surface of a lower flange 2b of the supply side tape reel 2 is set higher than a height h1 from the upper surface of the chassis 13 of the cartridge housing 1 to the lower surface of a lower flange 3b of the take-up side tape reel 3, whereby both the tape reels 2,3 are arranged with a step difference in the heigh direction within the cartridge housing 1 as shown in FIG. 2.

A tape constant speed control means (reel FG ((frequency generator)) is provided on the take-up side tape reel 3. An example of the tape constant speed control means is formed in such a manner that a comb-shaped cylinder 3c with a number of slits 50 formed on its outer periphery at an equal interval is attached to an upper flange 3d of the take-up side tape reel 3, and a light emitting element 51a and a light receiving element 51b of a photo-sensor 51 are disposed to oppose to each other with the slits 50 sandwiched therebetween. The passing number of slits 50 is counted by the photo-sensor 51, based on the accumulated value of counted number of slits 50, the tape diameter of the magnetic tape 4 wound on the take-up side tape reel 3 is calculated, and the rotating number of the take-up side tape reel 3 is controlled on the basis of calculated value to thereby make the tape feeding speed constant.

A reel motor for driving the supply side tape reel 2 and the take-up side tape reel 3 and its driving system will be described later on.

As shown in FIG. 3, the supply side guide roller 5 has provided on its upper and lower portions flangers 5a, 5b to restrict the tape position. The guide roller 5 is held by a tape tension adjusting mechanism 16. This tape tension adjusting mechanism 16 has a tension arm 18, which is supported by a fulcrum shaft 17 to be rotatable thereabout and the guide roller 5 is supported by the tension arm 18 at its front end. The tension arm 18 is provided with at its rear end a brake pad 19 in contact with the outer periphery of reel base 10 of the supply side tape reel 2. A tension spring 20 is provided on the fulcrum shaft 17 of the tension arm 18. One end 20a of tension spring 20 is engaged with a spring engaging portion 21 planted on the chassis 13 of cartridge housing 1, while the other end 20b thereof is engaged with a spring engaging portion 22 formed on the tension arm 18.

Thus, the tension arm 18 is biased by the tension spring 20 in the clockwise direction around the fulcrum shaft 17 in FIG. 1. That is, the magnetic tape 4 wound around the guide roller 5 is given with a force in a direction in which its tension is increased, while the brake pad 19 is given with a force by which the brake pad 19 is abutted against the outer periphery of reel base 10 to decelerate the rotation speed of supply side tape reel 2.

Further, the above-mentioned tape tension adjusting mechanism 16 is provided with a height adjusting mechanism for the guide roller 5. This heigh adjusting mechanism is formed of an adjusting screw 23 screwed into the fulcrum shaft 17 from above in this example. By screwing the height adjusting screw 23 into or out from the fulcrum shaft 17, the height of the guide roller 5 together with the tape tension adjusting mechanism 16 can be adjusted.

The drum entrance side inclined guide 6 is planted upward on a base plate 24 integrally extended from a fixed side drum of the rotary head drum 7 in a fixed fashion, whereby the positioning of the inclined guide 6 relative to the rotary head drum 7 can be performed accurately.

The rotary head drum 7 is comprised of a rotary side drum 25 provided with a magnetic head 25a and a fixed side drum 26 which is located lower than the rotary side drum 25. When a plurality of attaching portions 27 provided on the above-mentioned base plate 24 integrally extended from the fixed side drum 26 are fixed to the chassis 13 of the cartridge housing 1 by screws 27a, the rotary head drum 7 is fixed with a predetermined angle. A drum motor 28 incorporated in the rotary side drum 25 is employed as the drive motor for the rotary head drum 7 (see FIG. 1).

The drum exit side inclined guide 8 is planted upward on the base plate 24 integrally extended from the fixed side drum 26 of the rotary head drum 7 in a fixed fashion, whereby the positioning accuracy of the inclined guide 8 relative to the rotary head drum 7 can be increased.

Similar to the guide roller 5 described above, the take-up side guide foller 9 has flanger on its upper and lower portions to restrict the position of the tape 4 and fixed to the base plate 24 integrally extended from the fixed side drum 26 in a screwing fashion. The height of guide roller 9 is adjusted by its screwing amount to the base plate 24, and after the heigh thereof is adjusted, the height of the guide roller 9 is fixed by screwing a stopper screw 29 thereto.

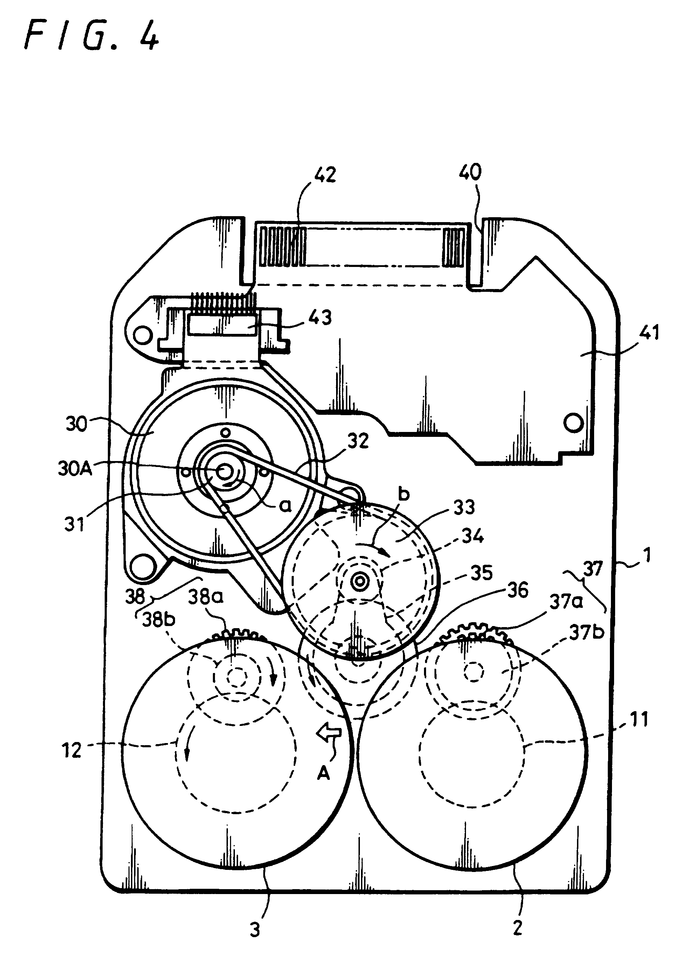

The reel motor for the supply side tape reel 2 and the take-up side tape reel 3 and its drive system will be described with reference to FIG. 4.

Reference numeral 30 designates the reel motor to the output shaft 30A of which attached is a motor pulley 31. The drive torque from the motor pulley 31 is transmitted to an intermediate pully 33 via a timing belt 32 with teeth. The intermediate pulley 33 is coaxially provided with an intermediate gear 34. An oscillating frame 35 is rotably supported by the intermediate gear 34 coaxial therewith. To the tip end of the oscillating frame 35 there is attached an oscillating gear 36 which is meshed with the intermediate gear 34. On the other hand, the reel gear 11 of the supply side tape reel 2 is meshed with a small gear 37b of a two-stage gear or relay gear 37 formed of a large gear 37a and the small gear 37b. Also, the reel gear 12 of the take-up side tape reel 3 is meshed with a small gear 38b of a two-stage gear or relay gear 38 formed of a large gear 38a and the small gear 38b.

As shown in FIG. 4, an opening portion 40 is formed through the cartridge housing 1 and a cartridge connector 42, which has a number of terminals extended from a substrate 41, is disposed in the opening portion 40. A signal processing circuit not shown is provided on the substrate 41. Reference numeral 43 denotes a reel motor connector which is connected to the cartridge connector 42 through a film wiring substrate not shown.

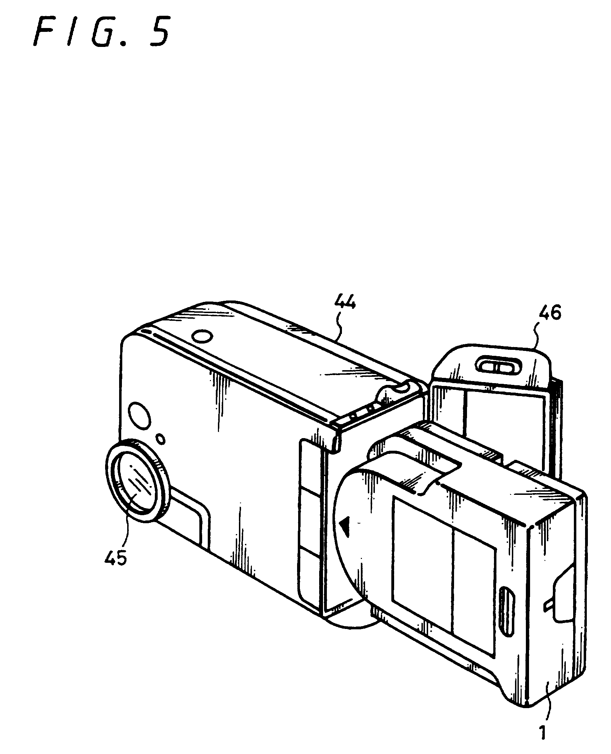

The cartridge of the present invention arranged as above is inserted from the side of the cartridge connector 42 into a video camera device 44 forming an electronic equipment and loaded therein as shown in FIG. 5. Then, the cartridge connector 42 is electrically connected to a terminal portion, not shown, of the video camera device 44. Thus, a video signal, an audio signal, a power supply signal, servo signals to the drum motor 28 and the reel motor 30 and the like are supplied from the video camera device 44 via the cartridge connector 42. By the way, in FIG. 5 the video camera device 44 is shown in such a state that it is inverted up and down, and reference numeral 45 denotes an image pickup lens and reference numeral 46 designates an opening and closing cover which serves a battery case, too.

Next, a series of operations of the recording and/or reproducing mechanism unit will be described.

Upon recording/reproducing operations, when the servo signals are supplied to the drum motor 28 and the reel motor 30, the motor pulley 31 of the reel motor 30 is rotated in the clockwise direction indicated by an arrow a in FIG. 4 and rotates both of the intermediate pulley 33 and the intermediate gear 34 through the timing belt 32 in the clock-wise direction indicated by an arrow b. Then, due to the rotation of the intermediate gear 34, the oscillating gear 36 oscillates in the left direction down by an arrow A in FIG. 4 and then meshes with the large gear 38a of the two-stage gear 38 on the side of the take-up side tape reel 3. Therefore, the rotation of the oscillating gear 36 is transmitted through the small gear 38b of the two-stage gear 38 to the reel gear 12 of the take-up side tape reel 3, whereby the take-up side tape reel 3 is rotated in the direction to take up the tape. Accordingly, the magnetic tape 4 runs along a tape path in which the tape is drawn from the supply side tape reel 2, wound around the rotary head drum 7 and taken up on the take-up side tape reel 3. Thus, the recording/reproducing operations for the tape 4 are carried by the rotary based drum 7 with the magnetic head 25a. In the case where the tape 4 is rewound around the supply side tape reel 2, when the reel motor 30 is inversely rotated, the oscillating gear 36 is oscillated in the right direction in FIG. 4 and then meshed with the large gear 37a of the two-stage gear 37. Thus, the rotation of the oscillating gear 36 is transmitted to the reel gear 11 via the small gear 37b of the two-state gear 37, whereby the supply side tape reel 2 is rotated in the direction to wind up the tape therearound.

As described above, since the magnetic tape 4 drawn out from the supply side tape reel 2 is wound around the guide roller 5 having the tape tension adjusting mechanism 16, when the tape tension becomes a high tension, the tension arm 18 is rotated in the counter-clockwise direction about the fulcrum shaft 17 in FIG. 1, for example, and the braking force of the brake pad 19 against the reel base 10 is loosed to thereby making it possible to adjust the high tension of the tape 4. On the contrary, when the tape tension is a low tension, the tension arm 18 is rotated in the clock-wise direction around the fulcrum shaft 17 by the tension spring 20 to increase the braking force of the brake pad 19 against the reel base 10 to thereby making it possible to adjust the low tension of the tape 4. As set forth above, according to the cartridge of the invention, the tape tension can be adjusted to be an optimum tape tension even when the tape tension is fluctuated and also the mechanism unit thereof can be simplified.

Further, because the flanges 5a, 5b are provided on the upper and lower portions of the guide roller 5 to restrict the tape position, and the moving direction of the guide roller 5 is made coincident with the tape running direction, the position of the tape path is not displaced even if the tape tension is fluctuated. Further, the winding angle of the tape 4 around the inclined guide 6 is not changed and hence it is possible to present a stable tape path.

Also, since the inclined guides 6, 8 on the entrance side and the exit side of the rotary head drum 7 are directly planted on the base plate 24 extended integrally from the fixed side drum 26 of the rotary head drum 7, the positionings of the inclined guides 6, 8 relative to the rotary head drum 7 can be made with high accuracy. Accordingly, the adjusting of the positions of inclined guides 6, 8 becomes unnecessary after the positions thereof are set, and the winding accuracy of the tape 4 around the rotary head drum 7 can be improved.

The guide roller 9 on the side of the take-up side tape reel 3 has on its upper and lower portions the flanges to restrict the tape position which are mounted on the base plate 24 integrally extended from the fixed side drum 26 of the rotary head drum 7 for its height to be adjustable in the up and down direction. Thus, after the height of the guide roller 9 is adjusted, the guide roller 9 is fixed at that position by the stopper screw 29, whereby it is possible to present the stable tape path with a simple arrangement.

Particuraly, in the cartridge according to the present invention, since the supply side tape reel 2 and the take-up side tape reel 3 are disposed at different height positions to present a step difference in the height direction, in the cartridge housing 1, when the tape 4 is to be wound around the rotary head drum 7 helically, the inclination angle of the rotary head drum 7 can be made to be horizontal by that amount. Thus, the space occupied by the rotary head drum 7 in the up and down direction in the cartridge housing can be reduced, whereby it becomes possible to reduce the size of cartridge housing 1 in the height direction. Accordingly, the cartridge can be made thin and, hence the video camera device 44, into which the cartridge is inserted, can be made thin.

The cartridge according to the present invention has a function to prevent the magnetic tape from being loosed during its running.

In an example to realize the above tape loose preventing function, as shown in FIGS 1 and 2, two reel urging plate springs 52, 53 are used. Each of the reel urging plate springs 52, 53 is produced by punching out a metal member good in elasticity made of stainless steel, phosphor bronze or the like. Attaching portions 52a, 53a of the reel urging plate springs 52, 53 are respectively fixed to caulking pins 54, 54 projected from the rear surface of the upper wall of the cartridge housing 1 by caulking, and the free end portions of the reel urging plate springs 52, 53 push down reel projectious 55, 56 projected upward from the center of the upper surfaces of tape reels 2,3, respectively.

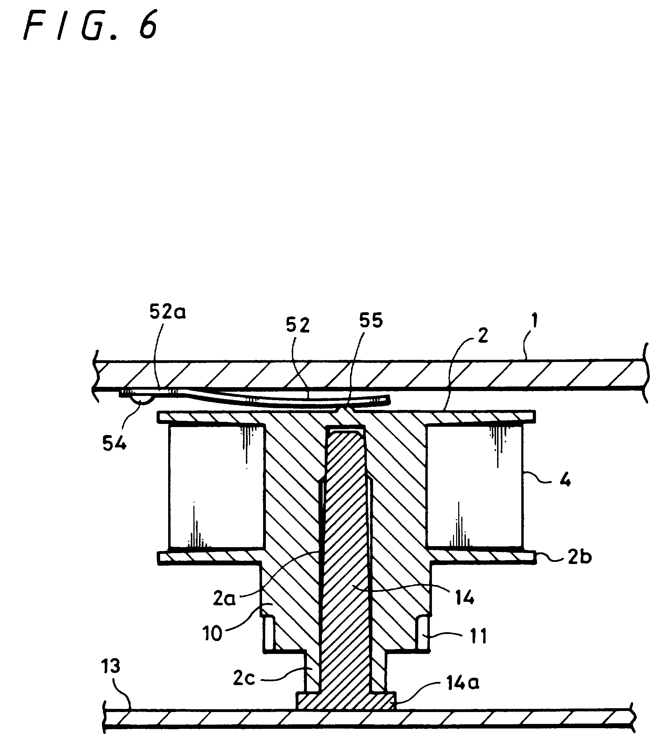

The state that the force of the reel urging plate spring 52 influences the supply side tape reel 2 will be explained with reference to FIG. 6, by way of example.

In the supply side tape reel 2, as described above, its reel shaft aperture 2a is engaged with the reel support shaft 14 planted on the chassis 13 in the cartridge housing 1 to be rotatable freely. Thus, the supply side tape reel 2 is pressed in the thrust direction by the spring force of the reel urging plate spring 52. Hence, a lower end portion 2c extended downward from the reel base 10 of the supply side tape reel 2 is made in contact with a reel shaft washer 14a of the reel support shaft 14 with a proper frictional force. By the way, both the supply side tape reel 2 and reel support shaft 14 are made of a material having a high anti-frictional property, for example, polyacetal resin or the like, so that there is produced no powder caused by the friction therebetween.

The relation between the take-up side tape reel 3 and the reel urging plate spring 53 is same as that mentioned just above.

Since the supply side tape reel 2 and the take-up side tape reel 3 are arranged as described above, both the tape reels 2,3 are rotated with a light brake being applied thereto when both the tape reels are rotated upon recording/reproducing, and the back tension is applied to the magnetic tape 4 when running. Thus, the tape 4 can be positively prevented from being loosed, to thereby making it possible to present the tape running with a high retiability.

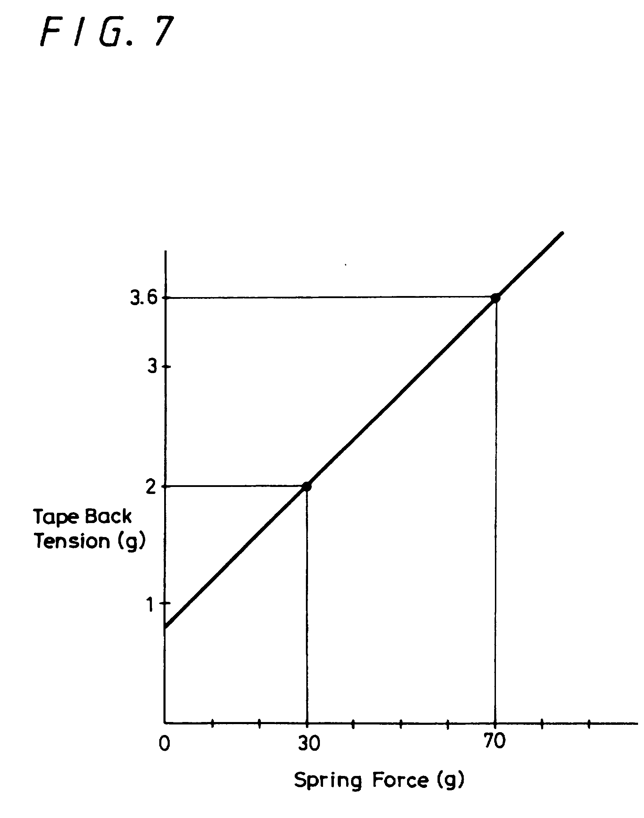

The relationship between the spring force of the reel urging plate springs 52, 53 and the tape back tension is shown in the graph graph of FIG. 7. According to the graph of FIG. 7, when the spring force of the reel urging plate springs 52, 53 is 30g, substantially 2g of back tension is applied to the tape 4, and when the spring force is 70g, substantially 3.6g of back tension is applied to the tape 4.

In the example of the present invention, since the supply side tape reel 2 side is provided with the tape tension adjusting mechanism 16 and the brake pad 19, in order to make it possible to finely adjust the tape tension by the tape tension adjusting mechanism 16, the spring force of the reel urging plate spring 52 is set to a light spring force of 30g (here, back tension of the tape is 2g ). On the other hand, since the take-up side tape reel 3 only has the function to wind the tape therearound, the spring force of the reel urging plate spring 53 is set to a somewhat strong spring force of 70g (here, back tension of 3.6g is applied to the tape ).In the example of the present invention, since only the reel urging plate springs 52,53 are sufficient to prevent the tape 4 from being loosed, the number of the parts can be reduced. In addition, because the reel urging plate springs 52,53 can be disposed within a narrow space between the upper portions of the tape reels 2,3 and the cartridge housing 1, it is possible to downsize the cartridge.

Further, according the example of the present invention, the reel urging plate spring 52,53 press the tape reels 2,3 from the above within the cartridge housing 1 so that when the cartridge is reversed up and down and then used, the reel urging plate springs 52,53 also serve to prevent the tape reels 2,3 from being floated.

In the above example of the present invention, although the brake operations against the tape reels 2,3 by the reel urging plate springs 52,53 are performed by the frictions between the lower portions of tape reels 2,3 and the reel shaft washers 14a, 15a thereof, it may be possible that the brake operation is effected by the frictions between the reel urging plate springs 52,53 and the projections 55,56 pressed by the former. In this case, in order to generate the friction sufficiently, the contact areas between the projections 55,56 and the plate springs 52,53 are made wide.

Further, when the spring force applied to the tape reels 2,3 is set different by a single reel urging plate spring, the spring force can be changed by changing the thickness of plate spring between the sides of tape reels 2,3.

Furthermore, in the example of the present invention, such a case where the cartridge having the recording and/or reproducing mechanism unit is used as the cartridge of the present invention can be widely used as a cartridge of an audio device which can perform the recording and/or reproducing by using a rotary head drum, or the like.

According to the cartridge having the recording and/or reproducing mechanism unit of the present invention, since the pair of tape reels are arranged with the step difference in the height direction, the rotary head drum can be inclined at an angle nearly horizontal and hence the height of the rotary head drum can be set low to thereby making it possible to reduce the thickness of the cartridge.

In the cartridge according to the present invention the pair of reel bases comprise driven portions, and the reel bases and the tape reels are integrally formed and then rotably supported by reel support shafts, respectively, so that the arrangement can be simplified and only one metal mold is sufficient, whereby the cartridge can be made at low cost.

Further, in the cartridge of the present invention, the reel urging plate springs fixed to the cartridge housing press the tape reels from above and a light brake force is generated in the tape reels by the spring force of the reel urging plate springs, whereby the back tension is applied to the running tape to prevent the tape from being loosed and hence the cartridge becomes to have a high reliability. Also, since the above function is achieved by the reel urging plate springs only, the number of parts can be reduced and the reel urging plate springs can be located in a narrow space with in the cartridge housing. Therefore, the downsizing of the cartridge can be realized. Further, because the tape reels are pressed by the reel urging plate springs from above, even if the cartridge is reversed up and down, the tape reels can be prevented from being floated with the result that the recording and/or reproducing can be performed stably.

According to the cartridge of the present invention, since the photo-sensor located to sandwich the cylindrical comb portion provided on the flange portion of one of the tape reels can detect the rotation of the tape reel, the rotation of the tape reel can be accurately detected by utilizing the narrow space effectively.

According to the cartridge of the present invention, the base plate integrally formed with the fixed side drum supports at least one of the tape guides on entrance and exit side of the drum, so that the positional accuracy of the tape guide relative to the rotary head drum can be increased without using a separate member.

Further, according to the cartridge of the present invention, both the tape reels are respectively provided with the relay gears, and the oscillating gear meshes selectively with one of relay gears to thereby rotatably drive the reel base, so that even when the two tape reels have the step difference therebetween, the tape reels can be rotatably driven positively.

According to the cartridge of the present invention, the cartridge housing is provided with the input/output terminal portion on the insertion direction side of the housing, and the contour of the housing on its insertion side has the round and curved-surface shape, so that the insertion direction of the cartridge can be recognized from its shape and the cartridge can be prevented from being inserted from the erroneous direction beforehand.

According to the system including the electronic equipment, the cartridge having the recording and/or reproducing mechanism unit, in which the pair of tape reels are arranged with the step difference therebetween in the height direction and the magnetic tape is wound around the drum helically, is made detachable with respect to the electronic equipment, and the input/output terminal portion of the cartridge is electrically connected to the connector of the electronic equipment to thereby carry out recording and/or reproducing of the cartridge. Therefore, it is possible to make the cartridge thin and hence to make the electronic equipment thin.

According to the system of the present invention, the cartridge is made to have the recording and/or reproducing mechanism unit in which the pair of reel bases comprise driven portions, the reel bases and the tape reels are integrally formed and rotably supported by reel support shafts, respectively, so that the arrangement can be simplified and only one metal mold is enough to thereby make the cartridge inexpensive.

Further, according to the system of the present invention, such a cartridge having the recording and/or reproducing mechanism unit, in which the reel urging plate springs fixed to the cartridge housing press the tape reels from above and a light brake force is generated in the tape reels by the spring force of the reel urging plate springs, is used, so that the back tension is applied to the running tape to prevent the tape from being loosed and hence the cartridge becomes to have a high reliability. Also, since the above function is achieved by the reel urging plate springs only, the number of parte can be reduced and the reel urging plate springs can be located in a narrow space. Therefore, the downsizing of the cartridge can be realized. Further, because the tape reels are pressed by the reel urging plate springs from above, even if the cartridge is reversed up and down, the tape reels can be prevented from being floated with the result that the recording and/or reproducing can be performed stably.

According to the system of the present invention, since such a cartridge having the recording and/or reproducing mechanism unit in which the photo-sensor located to sandwich the cylindrical comb portion provided on the flange portion of one of the tape reels can detect the rotation of the tape reel is used, the rotation of the tape reel can be accurately detected by utilizing the narrow space effectively.

According to the system of the present invention, since such a cartridge having the recording and/or reproducing mechanism unit in which the base plate integrally formed with the fixed side drum supports at least one of the tape guides on entrance and exit sides of the drum is used, so that the positional accuracy of the tape guide relative to the rotary head drum can be increased without using a separate member.

Further, according to the system of the present invention such a cartridge having the recording and/or reproducing mechanism unit in which both the tape reels are respectively provided with the relay gears, and the oscillating gear selectively meshes with one of relay gears to thereby rotatably drive the reel base is used, so that even when the two tape reels have the step difference therebetween, the tape reels can be rotatably driven positively.

According to the system of the present invention, the cartridge housing is provided with the input/output terminal portion to be electrically connected to the connector of the electronic equipment on one end side of the housing having the recording and/or reproducing mechanism unit therein, the input/output terminal portion side indicates the insertion direction side of the housing into the electronic equipment, the contour of the housing on its insertion side has the round and curved-surface shape, and the round and curved-surface shape discriminates the insertion direction of the housing. Thus, it is possible beforehand to prevent the cartridge from being inserted from the erroneous direction.

According to the present invention, since the electronic equipment is provided with the camera mechanism, it is possible to present the function of the video bult-in camera.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention as defined in the appended claims.

## Claims

1. A cartridge having a recording and/or reproducing mechanism unit which is comprised of a pair of reel bases, a pair of tape reels mounted on said pair of reel bases and a drum around which a magnetic tape drawn out from said tape reels is wound helically, integrally incorporated within a housing, comprising:
a step difference means for arranging said pair of tape reels with a step difference therebetween in a height direction, wherein said magnetic tape drawn out from said tape reel is helically wound around said drum by said step difference means in the height direction.

2. A cartridge having a recording and/or reproducing mechanism unit as claimed in claim 1, wherein said pair of reel bases comprise driven portions, said reel bases and said tape reels are integrally formed and rotatably supported by reel support shafts, respectively.

3. A cartridge having a recording and/or reproducing mechanism unit as claimed in claim 2, wherein relay gears are meshed with driven portions of said reel bases, respectively, and an oscillating gear oscillating in response to rotation directions of a reel drive motor selectively meshes with one of relay gears to thereby rotatably drive one reel base as well as the tape reel through said relay gear.

4. A cartridge having a recording and/or reproducing mechanism unit as claimed in claim 1, 2 or 3, wherein said tape reels are pressed at upper rotation centers thereof by reel urging members, respectively, and frictional forces in a thrust direction received by said tape reels are applied to said reel bases and said reel support shafts to thereby generate a light brake force to said tape.

5. A cartridge having a recording and/or reproducing mechanism unit according to any preceding claim, further comprising a cylindrical comb portion on a flange portion of one of said tape reels and a rotation detecting unit for detecting the rotation of said one reel by using a light from a photo-sensor located to sandwich said comb portion.

6. A cartridge having a recording and/or reproducing mechanism unit as claimed in any preceding claim, wherein said drum has a fixed side drum, a base plate is formed integral with said fixed side drum, and tape guides on entrance and exit side of said drum are supported by said base plate.

7. A cartridge having a recording and/or reproducing mechanism unit as claimed in any preceding claim, wherein an input/output terminal portion to be connected to a connector of an electronic equipment is provided at one end side of the housing having said recording and/or reproducing mechanism unit therein, said input/output terminal portion indicates an insertion direction of said housing into said electronic equipment, a contour of said housing on its insertion side has a round and curved-surface shape, and said round and curved-surface shape together with said input/output terminal portion indicates the insertion direction of said housing.

8. A system, comprising:
a cartridge according to any preceding claim; and
an electronic equipment, into which said cartridge is detachably inserted, having a connector to which an input/output terminal portion of said cartridge is electrically connected, and a drive circuit for driving said recording and/or reproducing mechanism unit to thereby carry out recording and/or reproducing of said cartridge.

9. A system as claimed in claim 8, wherein said electronic equipment has a camera mechanism unit.
